Europäisches Patentamt

European Patent Office

Office européen des brevets

(19)

(11) Publication number: **0 340 296 B1**

# EUROPEAN PATENT SPECIFICATION

(12)

(45) Date of publication of patent specification: **02.11.94**  (51) Int. Cl.⁵: **B22F 7/08**, B23K 1/00, B23P 6/04

(21) Application number: **89900384.2**

(22) Date of filing: **20.09.88**

(86) International application number:
**PCT/US88/03246**

(87) International publication number:
**WO 89/03740 (05.05.89 89/10)**

(54) **METHOD OF REPAIRING DAMAGES IN SUPERALLOYS.**

(30) Priority: **16.10.87 US 109487**
**09.09.88 US 241347**

(43) Date of publication of application:
**08.11.89 Bulletin 89/45**

(45) Publication of the grant of the patent:
**02.11.94 Bulletin 94/44**

(84) Designated Contracting States:
**DE FR GB IT SE**

(56) References cited:
EP-A- 0 075 497      FR-A- 2 296 491
US-A- 3 496 630      US-A- 3 716 347
US-A- 3 807 993      US-A- 4 285 459
US-A- 4 444 353      US-A- 4 478 638
US-A- 4 614 296

(73) Proprietor: **Avco Corporation**
**40 Westminster Street**
**Providence Rhode Island 02903 (US)**

(72) Inventor: **LEE, Jack, W.**
**10 Shamrock Dr.**
**Brookfield, CT 06804 (US)**
Inventor: **MILLER, Jule, A.**
**48 Belleview Dr.**
**Derby, CT 06418 (US)**
Inventor: **IOVENE, Michael, A.**
**1525 Woodside Dr.**
**Woodbridge, CT 06525 (US)**

(74) Representative: **Sturt, Clifford Mark et al**
**MARKS & CLERK**
**57-60 Lincoln's Inn Fields**
**London WC2A 3LS (GB)**

EP 0 340 296 B1

**Description**

This invention relates generally to the use of silicon-free metal alloy powder mixtures for filling holes and slots and repairing and reforming damaged surface areas in high temperature engine components. In particular, the invention uses novel metal alloy mixtures which have the ability to repair many service damaged components which are presently considered non-repairable. Also, the present metal alloy powder mixtures can be used in new part fabrication and/or for the reformation of eroded or damaged surface areas, such as the tips of unshrouded blades. The alloy powder mixtures are used in a novel method for filling large holes, slots and widegap joints, or reforming extended surface areas, which method yields metal deposits with remelt temperatures (i.e., solidus temperatures) substantially greater than those produced by previous filling or repairing or brazing techniques.

It has become increasingly important, especially in high temperature aircraft applications such as, for example, in turbine engine components, to use materials for structural applications that are capable of withstanding the combination of both high temperatures and corrosive attacks normally associated therewith. Stainless steels and the so-called superalloys, such as nickel-base superalloy, have been employed where possible to meet requirements of high strength to weight ratios, corrosion resistance, etc. at elevated temperatures. However, the greatest impediment to the efficient use of these materials has been the difficulty in repairing of service damaged components.

Generally speaking, known brazing filler metal materials do not have the desired properties that are necessary for use in filling relatively large holes, slots and widegap joints and various other types of defects in high temperature superalloys such as those used in turbine engine high temperature components. In addition, known alloy powders and mixtures are completely unsatisfactory for rebuilding or reforming surface areas of high temperature superalloy bodies, such as blade tips, and therefore they are not intended for such use. As a result, superalloy bodies such as engines which develop these types of defects lose efficiency, and parts, many of which are very expensive, must be scrapped. In addition to these problems and disadvantages, conventional brazing filler metals do not simultaneously give good wetting, very limited flow, and the ability to bridge defects so that the defects are repaired without filler material flowing into internal passages in the components. This is as expected because brazing filler metals are designed to flow into spaces via capillary action, i.e., they liquify at the processing or use temperature and are drawn into the joint interfaces being united. Furthermore, known brazing filler compositions do not have the above desired properties along with the ability to provide both excellent high temperature and corrosion resistance and, when properly coated, survive in the harsh environment of a turbine engine. Thus, there is a great need for proper metal alloy mixtures that can be used to repair and/or rebuild surface areas of high temperature superalloy bodies and for techniques of using these mixtures for these purposes.

Previously, repair of high temperature superalloys has been attempted with brazing filler metal compositions but these materials, some of which are disclosed in US-A-4,381,944, US-A-4,379,121, US-A-4,394,347, US-A-4,442,968, US-A-4,444,353, and US-A-4,478,638 have been found ineffective for the reasons stated above.

US-A-4,285,459, US-A-4,381,944 and US-A-4,478,638 relate to alloy powder mixtures formulated to melt and flow into small cracks in superalloy bodies under vacuum conditions and at processing temperatures above about 2124°F and up to about 2250°F but below the remelt temperature of preexisting brazes. This is similar to conventional brazing or soldering, requires the use of high processing temperatures which can damage the superalloy body and/or superalloy coatings thereon, and does not permit the alloy powder composition to retain its shape and location on the superalloy body during processing so that surface reformtion, such as blade tip reformation, can be made and large cracks can be filled and bridged without run-off or run-in.

EP-A-75497 discloses a process for assembling and repairing pieces of superalloys by brazing and diffusion whereby the powder mixture in one of the examples comprises 75 weight percent of a powder similar in composition to that of the superalloy and 25 weight percent of a lower melting powder consisting of 15 percent chromium, 3.5 percent boron and the rest nickel.

A first aspect of the present invention provides a method for repairing damaged superalloy bodies which comprises (a) applying directly into holes or slots or widegap joint damages on such bodies or reconstructing damaged, missing or worn surface extensions of such bodies, such as blade tips, a semi-solid, form-retaining, silicon-free metal alloy powder mixture capable of being processed at a temperature of between about 1090°C and 1150°C (about 2000°F and 2100°F), said metal alloy mixture consisting of (i) from 55 to 90 per cent by weight of a first, lower melting, nickel-base superalloy powder composition consisting of from 14 to 16 weight percent chromium, from 2.5 to 3.2 weight percent boron and the balance nickel, said lower melting composition having a liquidus above about 980°C (1800°F) and below about 1090°C (2000°F): (ii) from 10 to 40 percent by weight of a second, higher melting, nickel-base superalloy powder composition consisting of from 38 to 67 weight percent nickel, from 11 to 15 weight percent chromium, from 8 to 12 weight percent cobalt, from 3 to 10 weight percent tungsten, from 3.5 to 10 weight percent tatanlum, amounts less than 5.0 weight percent each of titanium, aluminum, molybdenum and hafnium, amounts less than 0.5 weight percent each of carbon and zirconium, and from 0.0005 to 0.025 weight percent boron, said higher melting composition having a liquidus above about 1200°C (2200°F) but below about 1260°C (2300°F); and (iii) from 0 to 20 percent by weight, less than the amount of said higher melting composition (ii), of nickel powder, (b) heating said applied metal alloy powder mixture to a processing temperature between about 1090°C (2000°F) and 1150°C (2100°F) for a sufficient time to cause the lower melting power (i) to melt and alloy with the higher melting powder (ii), and with the nickel powder (iii), if present, for forming a semi-solid high viscosity, high surface-tension, form-retaining composition having a solidus temperature of at least about 1065°C (1950°F), and (c) cooling said processed composition to form a sound, non-porous deposit which fills and bridges the holes, slots and widegap joints and retains substantially the same shape on a superalloy body being repaired before and after processing.

Other aspects and preferred features of the invention are set forth in the accompanying claims.

After step (b) the assembly may be heated further at or below the processing temperature to allow chemical homogenization of the metal mixture to occur. Preferably step (b) is conducted under a vacuum or an inert or hydrogen atmosphere.

The metal mixture preferably includes an organic binder.

The powder composition has a processing temperature above about 1090°C (2000°F) but below about 1150°C (2100°F), preferably about 1120°C (2050°F), at which temperature the low melting alloy powder melts and wets the high temperature alloy to form a non-flowing, semi-solid, putty-like composition having a high viscosity and high surface tension. These critical properties enable the composition to be processed at a relatively low temperature of 1090°C (2000°F) to 1150°C (2100°F) which will not damage the superalloy body being repaired, or superalloy coatings thereon. Moreover, these critical properties enable the composition to retain its shape and location, as applied to the body prior to processing, without flowing onto adjacent surface areas during processing, so that the composition can bridge large surface holes or routed-open cracks and can substantially retain its applied shape when applied and processed to reconstruct a portion of the body which has been eroded, corroded or routed away or otherwise is no longer present on the superalloy body being repaired, such as the worn off tip of a turbine blade. For these reasons the present composition are not satisfactory for repairing or filling small unrouted cracks in superalloy bodies since the present compositions will not flow into such cracks during processing. The repair of such small cracks with the present compositions requires the routing of the small cracks to enable the composition to be applied directly to the areas to be repaired as a putty which substantially retains its shape and location during processing to fill and bridge the routed areas without any flow therefrom or thereinto.

Techniques are being developed to repair gas turbine engine nickel-base alloy components, e.g., nozzels, that have thermal fatigue cracks and/or surface degradation both of which result from engine operation. The surface degradation can be the result of many reasons such as oxidation, hot-corrosion or erosion. In repairing the degradation, typically the damaged areas are first ground out to remove all of the undesirable material and leave a relatively clean surface after cleaning. The ground out areas are then directly filled with a filler metal slurry and then vacuum processed by a specific temperature cycle. The ground out areas are preferably nickel plated before vacuum processing if the base metal contains a high level of titanium and/or aluminum. To avoid damage to existing brazed joints and any protective surface coating, e.g., nickel-aluminide, of the component to be repaired, a filler metal with a relatively low liquidus temperature has been employed. In the prior use of the above-described technique for repair, the solidus or remelt temperature of the filler metal deposit was identical to the solidus of the original filler metal.

For this reason, only those components with operating temperatures below the solidus temperature of the filler metal were repairable by prior methods. In order to overcome this problem, i.e., to raise the solidus temperature of the deposits while keeping the deposition temperature below that which would cause damage to existing brazed joints and any protective coating, a novel powder metal mixture and method of using that mixture has been developed and are described herein and form the basis for the present invention.

Moreover, the present invention makes it possible, for the first time, to repair or reconstruct superalloy bodies or components which previously had to be discarded because extended surface portions thereof, such as unshrouded turbine blade tips, had been corroded, eroded or otherwise worn away. This is made possible by the alloy powder mixtures which can be formulated to a putty-like, semi-solid consistency which is moldable as an extension onto a superalloy body to form a replacement for the missing surface extension thereof, and which retains its molded shape during heat processing, without flowing or running, to form an integral superalloy body extension which can be machined to a final desired shape and coated if necessary to restore the superalloy body for reuse at service temperatures up to about 1090°C (2000°F).

Any suitable superalloy metal body may be filled using the novel filler metal powder mixtures described herein. It is preferred that such filling be conducted by a vacuum processing technique. Suitable metal bodies include for example, nickel-base superalloys that are typically used in turbine engine components, among others. While any suitable temperature resistant superalloy body may be repaired using the filler metal mixture of this invention, particularly good results are obtained with nickel-base superalloys.

The silicon-free metal powder mixture comprises a mixture of (i) the powdered relatively low melting nickel-base alloy discussed hereinbefore, which is silicon-free and contains 2.5 to 3.2 weight percent of boron as a melting point depressant, (ii) the powdered silicon-free nickel-based alloy melting above about 1200°C (2200°F) discussed hereinbefore, and optionally (iii) powdered nickel. The metal mixture will comprise 55 to 90 percent by weight low melting alloy, 10 to 40 percent by weight high melting alloy, and 0 to 20 percent by weight nickel. More preferably, the mixture will comprise 60 to 85 percent by weight low melting alloy, 15 to 40 percent by weight high melting alloy, and 0 to 15 percent by weight nickel. Still more preferably, the mixture will comprise 63 to above 82 percent by weight low melting alloy, 18 to 37 percent by weight high temperature alloy, and 0 to 12 percent by weight nickel. Most preferably, the mixture will comprise either (i) 68 to 72 percent by weight low melting alloy, 18 to 22 percent by weight high temperature alloy, and 8 to 12 percent by weight nickel or (ii) 63 to 67 percent by weight low melting alloy and 33 to 37 percent by weight high temperature alloy.

The low melting alloys useful herein are those nickel-based alloys which have liquidus temperatures above about 980°C (1800°F) but below about 1090°C (2000°F) and below the processing temperature of about 1090°C-1150°C (2000°-2100°F) to be used. Preferably, the liquidus temperature will be in the range of about 1050°C (1925°F) to about 1080°C (1975°F). In addition, the alloy must be silicon-free. The alloy contains a critical amount of boron as the melting point depressant and comprises from 14 to 16 percent, most preferably 15 percent, by weight chromium, from 1.5 to 3.2 percent most preferably 2.8 percent by weight boron, and the balance nickel, most preferably 82.2 percent by weight.

The preferred silicon-free high melting alloys useful herein are those nickel-based alloys disclosed in US-A-3,807,993, which melt above about 1200°C (2200°F). Such alloys have the composition disclosed hereinbefore and contain nickel, aluminum, boron, carbon, chromium, cobalt, hafnium, molybdenum, zirconium, tantalum, titanium and tungsten. Examples of such commercially-available alloys include C101 in a powder form. Most preferably, the high temperature alloy will comprise 12.2 to 13% chromium, 8.5 to 9.5% cobalt, 3.85 to 4.5 tantalum, 3.85 to 4.5% tungsten, 3.85 to 4.15% titanium, 3.2 to 3.6% aluminum, 1.7 to 2.1% molybdenum, 0.75 to 1.05% hafnium, 0.07 to 0.2% carbon 0.03 to 0.14% zirconium, 0.01 to 0.02% boron, and the balance nickel, all percents being by weight.

The metal powder mixtures must, after processing, have a solidus temperature, as determined by differential thermal analysis, of at least 1065°C (1950°F), preferably at least 1090°C (2000°F). In addition, the mixtures must be capable of being processed at a temperature of about 1090°C (2000°F), preferably 1120°C (2050°F). Moreover, the mixture must not flow when heated to the processing temperature, i.e., it must have a sufficiently high viscosity and surface tension that it will not flow out of the shape or place in which it is deposited. The processing temperature is selected to be above the melting point of the low melting alloy but below the melting point of the high melting alloy as this allows the high melting alloy to form a homogenous mixture by the alloying action of the liquid low melting alloy coming in contact with the high melting alloy powder. In addition, the metal mixture should be prepared using similar size particles to minimize and preferably avoid segregation. preferably the particle size is -200 and +325 U.S. mesh.

The processed metal mixtures may be coated with coating schemes that are typically used for high temperature superalloys. When properly coated, these metals survive in the harsh environment of a turbine engine. Depending upon the nature of the base metals to be repaired, a very thin layer of nickel may be plated onto the area needing repair or build-up prior to applying the metal mixture. When a nickel-base metal body being repaired contains higher concentrations of aluminum and titanium, for example, it is particularly advantageous to first apply this nickel coating.

To utilize the metal mixture described above to repair and/or reform surface areas of a particular part, the following sequence of steps is preferably followed:

1. First, determine the maximum temperature which can be tolerated by the component to be repaired without damaging existing brazed joints, coatings, and materials. The deposition or processing temperature to be used will be this maximum temperature or close thereto.

2. Select a low melting alloy with a liquidus below the acceptable temperature to be used.

3. Select a high temperature alloy with a melting point above the acceptable temperature to be used.

4. Uniformly mix the selected alloys optionally with nickel powder in the desired proportions.

5. Uniformly mix the metal powder mixture of step 4 with an organic binder, such as those used in conventional brazing, to form a putty-like moldable composition.

6. Route out damaged areas, if necessary, to form holes or slots and clean surface areas for reconstruction.

7. Directly fill completely the hole, slot or area to be repaired and/or apply a molded mass as an extension on the surface areas to be reformed, using the semi-solid metal mixture of step 5. Based on the chemical composition of the component being repaired preplating with nickel may be required. In addition, the component must be properly cleaned prior to deposition, though unusual cleaning efforts with penetrating materials such as fluoride ions are not necessary.

8. Place the component in a vacuum furnace or an inert or hydrogen gas furnace.

9. Heat the component to the processing temperature and hold at this temperature for about 10 minutes. Then continue to heat either at this temperature or at a lower temperature until adequate chemical homogenization is achieved. This usually will take several hours or more depending on the specific metal mixture utilized.

10. Solution, precipitation heat treat, and recoat as required based on the heat treatment and coating requirements of the component.

Both hot wall retort and cold wall radiant shield furnaces may be used while performing the deposition of the metal mixture compositions as defined by the present invention. However, because of some inherent advantages, cold wall furnaces are by far the more widely used.

When employing a vacuum technique, the vacuum pumping system should be capable of evacuating a conditioned chamber to a moderate vacuum, such as, for example; about $10^{-3}$ torr, in about 1 hour. The temperature distribution within the work being repaired should be reasonably uniform (i.e., within about $+5°C$ $(10°F)$).

The present invention will be further illustrated by the following non-limiting examples in which all parts and percentages are by weight unless otherwise specified.

EXAMPLE 1

Holes up to 5mm (0.20-in.) in diameter were drilled in 2.5mm (0.100-in.) thick nickel0base alloy specimens to simulate ground out cracks and eroded areas typically found in turbine airfoils damaged during engine operation. A filler metal powder mixture was mixed with an organic binder and applied to these holes. The filler metal mixture consisted nominally of 65% of a low melting alloy, 10% pure nickel and 25% of an alloy melting above $1150°C$ $(2100°F)$. The low melting alloy had a nominal composition of 2.8% B, 15.0% Cr and 82.2% Ni. The high melting point alloy is C101 having a nominal composition of 0.09% C, 12.6% Cr, 9.0% Co, 1.9% Mo, 4.3% W, 4.3% Ta, 4.0% Ti, 3.4% Al, 0.9% Hf, 0.015% B, 0.06% Zr, and balance Ni. All of the specimens were subjected to the same deposition/homogenization treatment cycle: $1120°C$ $(2050°F)$ for 10 minutes in a vacuum at $0.5 \times 10^{-3}$ torr maximum pressure followed by $1050°C$ $(1925°F)$ for 20 hours in a vacuum at $0.5 \times 10^{-3}$ torr maximum pressure.

Differential thermal analyses were conducted on the deposits. A solidus of $1084°C$ $(1983°F)$ and a liquidus $1105°C$ $(2020°F)$ were obtained for the deposits compared with $1055°C$ $(1930°F)$ for both the solidus and liquidus of the original low melting alloy alone. Visual, fluorescent penetrant, radiographic and metallograhic examinations were conducted on the deposits. Excellent soundness and surface geometry were obtained. Results indicated that the filler metal had a high enough viscosity and surface tension during processing so that it did not flow out of the holes being repaired.

COMPARATIVE EXAMPLES II AND III

The basic procedure of Example 1 were repeated with two different formulations using low melting alloys consisting of 1.9% B, 15% Cr, and 83.1% Ni (Example II) and 3.5% B, 15% Cr and 81.5% Ni (Example III). The nominal compositions and the DTA results were:

| COMPOSITION | | EXAMPLE | |
|---|---|---|---|
| | | II | III |
| Low melting alloy | | 75 | 70 |
| High melting alloy | | 25 | 20 |
| Nickel | | 5 | 10 |
| DTA Result, | °C | 1081 | 1077 |
| | (°F | 1977 | 1970) |

The composition of Example II was processed at 1160°C (2125°F) for 10 minutes and then at 1052°C (1925°F) for 20 hours. The composition of Example III was processed at 1090°C (2000°F) for 6 hours and then at 1040°C (1900°F) for ten hours.

EXAMPLE IV

The basic procedure of Example I was repeated except that the metal mixture nominally comprised 35% of the high temperature alloy and 65% of the low melting alloy consisting of 2.8% B, 15% Cr, and 82.2% Ni. The sample was processed at 1120°C (2050°F) for ten hours.

EXAMPLE V

The basic procedure of Example I was repeated except that the metal mixture nominally comprised 35% of the high temperature alloy and 65% of the low melting alloy consisting of 2.8% B, 15% Cr, and 82.2% Ni. The sample was processed at 1120°C (2050°F) for 10 minutes followed by 20 hours at 1052°C (1925°F). The sample exhibited superior soundness and DTA yielded a solidus temperature of 1101°C (2014°F).

COMPARATIVE EXAMPLE A

The basic procedure of Examples I-IV was repeated for a variety of metal mixture formulations and thermal cycles as identified below in Table I. In each case a sound deposit was produced but DTA determined that the solidus of each was too low to be useful in the present invention.

EP 0 340 296 B1

TABLE I

| Results of Comparative Example A | | | | | | |
|---|---|---|---|---|---|---|
| Composition | | | Sample | | | |
| | | | 1 | 2 | 3 | 4 |
| Low melting alloy | | | 100[1] | 75[2] | 70[2] | 70[2] |
| High melting alloy | | | -- | 15[3] | 30[4] | 20[3] |
| Nickel | | | -- | 10 | -- | 10 |
| Thermal Cycle | | | | | | |
| 10 min. at | | °C | 1160 | 1090 | 1090 | 1090 |
| | | (°F | 2125 | 2000 | 2000 | 2000 ) |
| followed by 20 hours at 552°C (1025°F) | | | | | | |
| Solidus, | | °C | 1063 | 1054 | 1055 | 1049 |
| | | (°F | 1946 | 1930 | 1931 | 1920 ) |

1. Alloy comprised 1.9% B, 15% Cr, 83.1% Ni.
2. Alloy comprised 3.5% B, 15% Cr, 81.5% Ni.
3. Alloy - same as Example I (C101)
4. Alloy 625 which comprises 21.5% Cr, 9.0% Mo, 3.65% Cb + Ta, 65.85% Ni.

COMPARATIVE EXAMPLE B

The basic procedure of Examples I-IV was repeated for various metal mixtures as identified in Table II below. each of the samples was processed at either 1090°C (2000°F)or 1120°C (2050°F) for 10 minutes and then allowed to cool. All of the samples were then visually evaluated and all were found to be unsound as specified in Table II. Thus no extended heating for homogenization was conducted. These results indicate that only the mixtures specified give the desired results.

7

## TABLE II

### Results of Comparative Example B

| Sample | Formulation, % | | Results |
|---|---|---|---|
| 5. | Low melt. of Ex. III | -75 | Excessive porosity |
|  | C101 | -25 |  |
| 6. | Low melt. of Ex. III | -75 | Poor wetting, bridging and bonding, excessive porosity |
|  | Ni-Cr-Al-y | -25 |  |
| 7. | Low melt. of Ex. III | -65 | "       "       "       " |
|  | C101 | -35 |  |
| 8. | Low melt. of Ex. III | -50 | "       "       "       " |
|  | C101 | -50 |  |
| 9. | Low melt. of Ex. III | -70 | No wetting |
|  | Hastelloy X | -30 |  |

| 10. | Low melt. of Ex. III | -70 | Poor wetting/bonding |
| | Inconel 718 | -20 | and bridging |
| | Nickel | -10 | |
| 11. | Low melt of Ex. III | -70 | " " " " |
| | Ni-Cr (80-20) | -20 | |
| | Hastelloy X | -10 | |
| 12. | Low melt of Ex. III | -75 | " " " " |
| | Hastelloy X | -25 | |
| 13. | Low melt of Ex. III | -70 | Heavy Porosity |
| | Inconel | -20 | |
| | Nickel | -10 | |
| 14. | Low melt of Ex. II | -65 | Heavy Porosity, |
| | C101 | -35 | Unsound |
| 15. | Low melt of Ex. I | -65 | Unsound |
| | Hastelloy X | -35 | |
| 16. | Low melt of Ex. I | -65 | Unsound |
| | Hastelloy X | -25 | |
| | Nickel | -10 | |

While specific components of the present system are defined in the working examples above, any of the other typical materials indicated above may be substituted in the working examples, if appropriate.

## Claims

1. A method for repairing damaged superalloy bodies which comprises (a) applying directly into holes or slots or widegap joint damages on such bodies or reconstructing damaged, missing or worn surface extensions of such bodies, such as blade tips, a semi-solid, form-retaining, silicon-free metal alloy powder mixture capable of being processed at a temperature of between about 1090°C and 1150°C (about 2000°F and 2100°F), said metal alloy mixture consisting of (i) from 55 to 90 percent by weight of a first, lower melting, nickel-base superalloy powder composition consisting of from 14 to 16 weight percent chromium, from 2.5 to 3.2 weight percent boron and the balance nickel, said lower melting composition having a liquidus above about 980°C (1800°F) and below about 1090°C (2000°F): (ii) from 10 to 40 percent by weight of a second, higher melting, nickel-base superalloy powder composition consisting of from 38 to 67 weight percent nickel, from 11 to 15 weight percent chromium, from 8 to 12 weight percent cobalt, from 3 to 10 weight percent tungsten, from 3.5 to 10 weight percent tantalum, amounts less than 5.0 weight percent each of titanium, aluminum, molybdenum and hafnium, amounts less than 0.5 weight percent each of carbon and zirconium, and from 0.0005 to 0.025 weight percent boron, said higher melting composition having a liquidus above about 1200°C (2200°F) but below about 1260°C (2300°F); and (iii) from 0 to 20 percent by weight, less than the amount of said higher melting composition (ii), of nickel powder, (b) heating said applied metal alloy powder mixture to a processing temperature between about 1090°C (2000°F) and 1150°C (2100°F) for a sufficient time to cause the lower melting powder (i) to melt and alloy with the higher melting powder (ii), and with the nickel powder (iii), if present, for forming a semi-solid high viscosity, high surface-tension, form-retaining composition having a solidus temperature of at least about 1065°C (1950°F), and (c) cooling said processed composition to form a sound, non-porous deposit which fills and bridges the holes, slots and widegap joints and retains substantially the same shape on a superalloy body being repaired before and after processing.

2. The method of claim 1, wherein after step (b) the assembly is continued to be heated at or below said processing temperature for a time to allow chemical homogenization of said metal mixture to occur.

3. The method of claim 1, wherein step (b) is conducted under a vacuum.

4. The method of claim 1, wherein step (b) is conducted under an inert or hydrogen atmosphere.

5. The method of claim 1, wherein said metal mixture includes an organic binder.

6. The method of claim 1, wherein the metal mixture consists of, by weight 60 to 85 percent low melting alloy, 10 to 40 percent higher melting alloy (ii), and 0 to 15 percent nickel.

7. The method of claim 1, wherein the metal mixture consists of, by weight, 63 to 82 percent low melting alloy (i), 18 to 37 percent higher melting alloy (ii), and 0 to 12 percent nickel.

8. The method of claim 1, wherein the low melting alloy comprises 2.8 weight boron.

9. The method of claim 1, wherein the low melting alloy has a solidus temperature of about 1050°C (1925°F) to about 1080°C (1975°F).

10. The method of claim 1 wherein the low melting alloy comprises, by weight, 15 percent chromium, 2.8 percent boron, and the balance nickel.

11. The method of claim 10, wherein the higher melting alloy (ii) comprises, by weight, 12.2% to 13.0% chromium, from 8.5% to 9.5% cobalt, from 3.85% to 4.50% tungsten, from 3.85% to 4.50% tantalum, from 3.85% to 4.15% titanium, from 3.2% to 3.6% aluminum, from 1.70% to 2.10% molybdenum, from 0.75% to 1.05% hafnium, from 0.07% to 0.02% carbon, from 0.03% to 0.14% zirconium, from 0.01% to 0.02% boron and the remainder nickel.

12. The method of claim 1, wherein the superalloy being repaired is nickel-based.

13. The method of claim 12, which comprises first coating a thin layer of nickel onto the area of the body to be repaired.

14. The method of claim 1, wherein the metal mixture comprises, by weight, 70% of the low melting alloy of claim 11, 20% of the higher melting alloy of claim 12, and 10% nickel.

15. The method of claim 1, wherein the metal mixture comprises, by weight 65% of the low melting alloy of claim 10, 25% of the higher melting of claim 11, and 10% nickel.

16. The method of claim 1, wherein the metal mixture comprises, by weight 75% of the low melting of claim 11, 20% of the higher melting of claim 11, and 5% nickel.

17. The method of claim 1, wherein the metal mixture comprises, by weight, 80% of the low melting alloy of claim 10 and 20% of the higher melting alloy of claim 11.

18. The method of claim 17, wherein the metal mixture comprises, by weight, 65% of the low melting alloy of claim 10 and 35% of the higher melting alloy of claim 11.

**19.** The method of claim 1, wherein the solidus temperature of the deposited mixture is at least 1090°C (2000°F) and the deposition temperature is at least 1120°C (2050°F).

**20.** A method of repairing a damage in a high temperature superalloy component while not causing damage to existing brazed joints and coatings thereon, which comprises:

(a) determining the maximum temperature which can be tolerated by the component without damaging existing brazed joints and coatings;

(b) selecting a powdered nickel-based silicon-free low melting alloy which has a liquidus temperature above 980°C (1800°F) and below about 1090°C (2000°F) and consisting of a powder (i) as defined in claim 1;

(c) selecting a powdered nickel-based silicon-free higher melting alloy having a melting point above 1150°C (2100°F) and consisting of a powder (ii), as defined in claim 1;

(d) uniformly mixing the alloy powders (i) and (ii), optionally with nickel powder (iii), in the proportions, as defined in claim 1;

(e) uniformly mixing the metal powder mixture of (d) with an organic binder to form a semi-solid, farm-retaining composition;

(f) routing out the damage, if necessary, to form a hole, slot or widegap joint or receptive surface;

(g) directly filling or reconstructing the damage to be repaired with the mixture of (e);

(h) placing the component in a furnace;

(i) heating the component to a temperature of about 1090°C (2000°F) for about 10 minutes and then continuing to apply heat until chemical homogenization is achieved.

**21.** The method of claim 20, wherein the repaired damage will withstand a temperature of at least 1065°C (1950°F) in subsequent use.

**22.** The method of claim 20, wherein the heating in (i) is to at least 1120°C (2050°F) and the repaired damage will withstand a temperature of at least 1090°C (2000°F) in subsequent use.

**23.** The method of claim 14, wherein the low melting alloy comprises eight percent chromium, 2.8 weight percent boron, and the balance nickel.

**24.** The method of claim 20, wherein the higher melting alloy of step (c) is as defined in claim 11.

**25.** The method of claim 20, wherein the furnace is a vacuum furnace.

**26.** The method of claim 20, wherein the superalloy being repaired is nickel-based and a thin layer of nickel is plated onto the area to be repaired before step (f).

**Patentansprüche**

**1.** Verfahren zur Reparatur von beschädigten Gegenständen aus einer Superlegierung, welches einschließt

(a) die Anwendung unmittelbar in Löchern, Schlitzen oder Breitfugenstößen derartiger Gegenstände oder das Wiederherstellen beschädigter, fehlender oder verschlissener Oberflächenvorsprünge derartiger Gegenstände, wie zum Beispiel Schaufelspitzen, eine halbmassive, formbeständige, siliziumfreie Legierungspulver-Mischung, geeignet für die Verarbeitung bei einer Temperatur zwischen etwa 1090 °C und 1150 °C (etwa 2000 und 2100 °F), welche Metallegierungs-Mischung zusammengesetzt ist aus

(i) 55 bis 90 Gew.-% eines ersten, niedriger schmelzenden, Nickelbasis-Superlegierungs-Pulvergemischs mit 14 bis 16 Gew.-% Chrom, 2,5 bis 3,2 Gew.-% Bor und Nickel als Rest, welches niedriger schmelzende Gemisch eine Liquidustemperatur oberhalb von etwa 980 °C (1800 °F) und unterhalb von 1090 °C (2000 °F) aufweist;

(ii) 10 bis 40 Gew.-% eines zweiten, höher schmelzenden Nickelbasis-Superlegierungs-Pulvergemischs mit 38 bis 67 Gew.-% Nickel, 11 bis 15 Gew.-% Chrom, 8 bis 12 Gew.-% Kobalt, 3,5 bis 10 Gew.-% Tantal, Anteile von jeweils weniger als 5 Gew.-% an Titan, Aluminium, Molybdän und Hafnium, Anteile von jeweils weniger als 0,5 Gew.-% an Kohlenstoff und Zirkonium und von 0,0005 bis 0,025 Gew.-% an Bor, welches höher schmelzende Gemisch eine Liquidustemperatur oberhalb von etwa 1200 °C (2200 °F) aber unterhalb von 1260 °C (2300 °F) aufweist; und

(iii) 0 bis 20 Gew.-%, weniger als der Anteil des höher schmelzenden Gemisches (ii), an Nickelpulver,

(b) das Aufheizen der verwendeten Metallegierung-Pulvermischung auf eine Verarbeitungstemperatur zwischen etwa 1090 °C (2000 °F) und 1150 °C (2100 °F) über eine ausreichende Zeitdauer, um das niedriger schmelzende Pulver (i) zum Schmelzen zu bringen und sich mit dem höher schmelzenden Pulver (ii) zu legieren sowie mit dem Nickelpulver, soweit vorhanden, und um ein halbmassives, formbeständiges Gemisch mit hoher Viskosität und hoher Oberflächenspannung zu bilden mit einer Solidustemperatur von wenigstens etwa 1065 °C (1950 °F) und

(c) Abkühlen dieses Gemisches nach der Verarbeitung, um eine lunkerfreie, nichtporöse Schicht zu bilden, welche die Löcher, Schlitze und Breitfugenstöße füllt und überbrückt und an einem ausgebesserten Gegenstand aus Superlegierung weitgehend die gleiche Form vor und nach der Verarbeitung beibehält.

2. Verfahren nach Anspruch 1, dadurch gekennzeichnet, daß nach dem Schritt (b) die Beheizung der Anordnung bei oder unterhalb der angegebenen Verarbeitungstemperatur für eine solche Zeitspanne fortgesetzt wird, die es ermöglicht, daß die chemische Homogenisierung der angegebenen Metallmischung stattfindet.

3. Verfahren nach Anspruch 1, dadurch gekennzeichnet, daß Schritt (b) unter Vakuum stattfindet.

4. Verfahren nach Anspruch 1, dadurch gekennzeichnet, daß Schritt (b) in inerter oder in Wasserstoff-Atmosphäre stattfindet.

5. Verfahren nach Anspruch 1, dadurch gekennzeichnet, daß das angegebene Metallgemisch ein organisches Bindemittel enthält.

6. Verfahren nach Anspruch 1, dadurch gekennzeichnet, daß das angegebene Metallgemisch 60 bis 85 Gew.-% der niedrig schmelzenden Legierung, 10 bis 40 Gew.-% der höher schmelzenden Legierung und 0 bis 15 Gew.-% Nickel aufweist.

7. Verfahren nach Anspruch 1, dadurch gekennzeichnet, daß das angegebene Metallgemisch 63 bis 82 Gew.-% der niedrig schmelzenden Legierung, 18 bis 37 Gew.-% der höher schmelzenden Legierung und 0 bis 12 Gew.-% Nickel aufweist.

8. Verfahren nach Anspruch 1, dadurch gekennzeichnet, daß die niedrig schmelzende Legierung 2,8 Gew.-% Bor enthält.

9. Verfahren nach Anspruch 1, dadurch gekennzeichnet, daß die niedrig schmelzende Legierung eine Solidustemperatur von etwa 1050 °C (1925 °F) bis etwa 1080 °C (1975 °F) aufweist.

10. Verfahren nach Anspruch 1, dadurch gekennzeichnet, daß die niedrig schmelzende Legierung 15 Gew.-% Chrom, 2,8 Gew.-% Bor und als Rest Nickel enthält.

11. Verfahren nach Anspruch 1, dadurch gekennzeichnet, daß die höher schmelzende Legierung Gehalte von 12,2 bis 13,0 Gew.-% Chrom, 8,5 bis 9,5 Gew.-% Kobalt, 3,85 bis 4,50 Gew.-% Wolfram, 3,85 bis 4,50 Gew.-% Tantal, 3,85 bis 4,15 Gew.-% Titan, 3,2 bis 3,6 Gew.-% Aluminium, 1,70 bis 2,10 Gew.-% Molybdän, 0,75 bis 1,05 Gew.-% Hafnium, 0,07 bis 0,2 Gew.-% Kohlenstoff, 0,03 bis 0,14 Gew.-% Zirkonium, 0,01 bis 0,02 Gew.-% Bor und als Rest Nickel aufweist.

12. Verfahren nach Anspruch 1 mit einer Superlegierung auf Nickelbasis für den ausgebesserten Gegenstand.

13. Verfahren nach Anspruch 12 mit einer dünnen Lage aus Nickel als erste Schicht auf der auszubessernden Fläche des Gegenstands.

14. Verfahren nach Anspruch 1 mit einer Metallmischung, die 70 Gew.-% der niedrig schmelzenden Legierung nach Anspruch 10, 20 Gew.-% der höher schmelzenden Legierung nach Anspruch 11 und 10 Gew.-% Nickel aufweist.

**15.** Verfahren nach Anspruch 1, dadurch gekennzeichnet, daß die Metallmischung 65 Gew.-% der niedrig schmelzenden Legierung nach Anspruch 10, 25 Gew.-% der höher schmelzenden Legierung nach Anspruch 11 und 10 Gew.-% Nickel aufweist.

**16.** Verfahren nach Anspruch 1, dadurch gekennzeichnet, daß die Metallmischung 75 Gew.-% der niedrig schmelzenden Legierung nach Anspruch 10, 20 Gew.-% der höher schmelzenden Legierung nach Anspruch 11 und 5 Gew.-% Nickel aufweist.

**17.** Verfahren nach Anspruch 1, dadurch gekennzeichnet, daß die Metallmischung 80 Gew.-% der niedrig schmelzenden Legierung nach Anspruch 10, 20 Gew.-% der höher schmelzenden Legierung nach Anspruch 11 aufweist.

**18.** Verfahren nach Anspruch 1, dadurch gekennzeichnet, daß die Metallmischung 65 Gew.-% der niedrig schmelzenden Legierung nach Anspruch 10, 35 Gew.-% der höher schmelzenden Legierung nach Anspruch 11 aufweist.

**19.** Verfahren nach Anspruch 1, dadurch gekennzeichnet, daß die Solidustemperatur der abgeschiedenen Mischung wenigstens 1090 °C (2000 °F) und die Abscheidungstemperatur wenigstens 1120 °C (2050 °F) beträgt.

**20.** Verfahren zur Ausbesserung eines Schadens an einer Komponente aus einer hochtemperaturbeständigen Superlegierung, ohne Schäden an vorhandenen Lötverbindungen und Beschichtungen daran zu verursachen, mit den Schritten:

(a) Bestimmen der höchsten Temperatur, die ohne Schädigung vorhandener Lötverbindungen und Beschichtungen zulässig ist;

(b) Auswahl einer siliziumfreien niedrig schmelzenden Legierung auf Nickelbasis mit einer Liquidustemperatur oberhalb von 980 °C (1800 °F) und unterhalb von etwa 1090 °C (200 °F) bestehend aus einem Pulver (i) gemäß Anspruch 1;

(c) Auswahl einer siliziumfreien höher schmelzenden Legierung auf Nickelbasis mit einem Schmelzpunkt oberhalb von 1150 °C (2100 °F) und unterhalb von etwa 1090 °C (200 °F) bestehend aus einem Pulver (ii) gemäß Anspruch 1;

(d) gleichmäßiges Mischen der Legierungspulver (i) und (ii), wahlweise mit Nickelpulver (iii) in Anteilen gemäß Anspruch 1;

(e) gleichmäßiges Mischen der Legierungspulver gemäß (d) mit einem organischen Bindemittel zur Bildung einer halbmassiven formbeständigen Struktur;

(f) Ausfräsen der Schadstelle, falls erforderlich, um ein Loch einen Schlitz oder einen Breitfugenstoß oder eine aufnahmefähige Oberfläche zu bilden;

(g) unmittelbares Füllen und Wiederherstellen der auszubessernden Schadstelle mit der Mischung nach (e);

(h) Einsetzen der Komponente in einen Schmelzofen;

(i) Aufheizen der Komponente auf eine Temperatur von etwa 1090 °C (2000 °F) für etwa 10 Minuten und anschließendes Halten zwecks Einwirkung der Hitze bis eine chemische Homogenisierung erreicht ist.

**21.** Verfahren nach Anspruch 20, dadurch gekennzeichnet, daß die ausgebesserte Schadstelle einer Temperatur von wenigstens 1065 °C (1950 °F) bei Anschließendem Gebrauch widersteht.

**22.** Verfahren nach Anspruch 20, dadurch gekennzeichnet, daß das Aufheizen gemäß (i) auf wenigstens 1120 °C (2050 °F) erfolgt und die ausgebesserte Schadstelle einer Temperatur von wenigstens 1090 °C (2000 °F) bei anschließendem Gebrauch widersteht.

**23.** Verfahren nach Anspruch 14, dadurch gekennzeichnet, daß die niedrig schmelzende Legierung 8 Gew.-% Chrom, 2,8 Gew.-% Bor und Nickel als Rest aufweist.

**24.** Verfahren nach Anspruch 20, dadurch gekennzeichnet, daß als höher schmelzende Legierung nach Schritt (c) diejenige nach Anspruch 11 vorgesehen ist.

**25.** Verfahren nach Anspruch 20, dadurch gekennzeichnet, daß der Schmelzofen ein Vakuumofen ist.

**26.** Verfahren nach Anspruch 1, dadurch gekennzeichnet, daß der auszubessernde Gegenstand aus einer Nickelbasis-Superlegierung besteht und eine dünne Lage Nickel auf die auszubessernde Fläche vor Schritt (f) aufgebracht wird.

## Revendications

**1.** Un procédé de réparation de corps en superalliage endommagés, comprenant (a) l'application directe dans les trous, les fentes ou les joints à grand écartement, constituant les dégâts sur de tels corps, ou en vue de la réparation d'extensions de tels corps à surface endommagée, manquante ou usée, comme des pointes de pale, d'un mélange de poudre d'alliage métallique semi-solide, exempt de silicium, indéformable, pouvant être traité à une température comprise entre environ 1090°C et 1150°C (entre environ 2000°F et 2100°F), ledit mélange d'alliage métallique étant composé

(i) de 55 à 90 pour cent en poids d'une première composition de poudre de superalliage à base de nickel, à point de fusion moins élevé, contenant de 14 à 16 pour cent en poids de chrome, de 2,5 à 3,2 pour cent en poids de bore et du nickel d'équilibrage, ladite composition à point de fusion moins élevé ayant un liquidus supérieur à environ 980°C (1800°F) et inférieur à environ 1090°C (2000°F); (ii) de 10 à 40% en poids d'une deuxième composition de poudre de superalliage à base de nickel, à point de fusion plus élevé, contenant de 38 à 67 pour cent en poids de nickel, de 11 à 15 pour cent en poids de chrome, de 8 à 12 pour cent en poids de cobalt, de 3 à 10 pour cent en poids de tungstène, de 3,5 à 10 pour cent en poids de tantale, des quantités, chacune inférieure à 5,0 pour cent en poids de titane, d'aluminium, de molybdène et de hafnium, des quantités, chacune inférieure à 0,5 pour cent en poids de carbone et de zirconium, et de 0,0005 à 0,025 pour cent en poids de bore, ladite composition à point de fusion plus élevé ayant un liquidus supérieur à environ 1200°C (22000°F) mais inférieur à environ 1260°C (2300°F); et (iii) de 0 à 20 pour cent en poids, moins que la quantité de ladite composition à point de fusion plus élevé

(ii), de poudre de nickel, (b) chauffage du dit mélange de poudre d'alliage métallique appliqué à une température de traitement comprise entre environ 1090°C (2000°F) et 1150°C (2100°F) pendant un temps suffisant pour entraîner la fusion de la poudre a point de fusion moins éleve (i) et son alliage avec la poudre à point de fusion plus élevé (ii), et avec la poudre de nickel

(iii), dans la mesure où il y en a, pour former une composition semi-solide, hautement visqueuse, à tension superficielle élevée et indéformable, ayant une température du solidus correspondant au moins à environ 1065°C (1950°F), et (c) refroidissement de ladite composition traitée pour former un dépôt solide, non poreux, remplissant et comblant les trous, les fentes et les joints à grand écartement et maintenant pratiquement la même forme sur un corps en superalliage en réparation avant et après le traitement.

**2.** Le procédé selon la revendication 1, dans lequel l'assemblage continue à être chauffé à cette température de traitement ou en-dessous de celle-ci après l'étape (b), pendant un temps suffisant pour permettre une homogénéisation chimique du dit mélange métallique.

**3.** Le procédé selon la revendication 1, dans lequel l'étape (b) est réalisée sous vide.

**4.** Le procédé selon la revendication 1, dans lequel l'étape (b) est réalisée dans une atmosphère inerte ou d'hydrogène.

**5.** Le procédé selon la revendication 1, dans lequel ledit mélange métallique englobe un liant organique.

**6.** Le procédé selon la revendication 1, dans lequel le mélange métallique est composé de 60 à 85 pour cent en poids d'alliage à bas point de fusion, de 10 à 40 pour cent d'alliage à point de fusion plus élevé (ii) et de 0 à 15 pour cent de nickel.

**7.** Le procédé selon la revendication 1, dans lequel le mélange métallique est composé de 63 à 82 pour cent en poids d'alliage à bas point de fusion (i), de 18 à 37 pour cent d'alliage à point de fusion plus élevé (ii) et de 0 à 12 pour cent de nickel.

**8.** Le procédé selon la revendication 1, dans lequel l'alliage à bas point de fusion comprend 2,8 pour cent en poids de bore.

9. Le procédé selon la revendication 1, dans lequel l'alliage à bas point de fusion a une température du solidus comprise entre environ 1050°C (1925°F) et 1080°C (1975°F).

10. Le procédé selon la revendication 1, dans lequel l'alliage à bas point de fusion comprend 15 pour cent en poids de chrome, 2,8 pour cent en poids de bore et du nickel d'équilibrage.

11. Le procédé selon la revendication 10, dans lequel l'alliage à point de fusion plus élevé (ii) comprend de 12,2% à 13,0% en poids de chrome, de 8,5% à 9,5% en poids de cobalt, de 3,85% à 4,50% en poids de tungstène, de 3,85% à 4,50% en poids de tantale, de 3,85% à 4,15% en poids de titane, de 3,2% à 3,6% en poids d'aluminium, de 1,70% à 2,10% en poids de molybdène, de 0,75% à 1,05% en poids de hafnium, de 0,07% à 0,02% en poids de carbone, de 0,03% à 0,14% en poids de zirconium, de 0,01% à 0,02% en poids de bore et pour le reste du nickel.

12. Le procédé selon la revendication 1, dans lequel le superalliage réparé est à base de nickel.

13. Le procédé selon la revendication 12, comprenant en premier lieu l'application d'une fine couche de nickel sur la surface du corps à réparer.

14. Le procédé selon la revendication 1, dans lequel le mélange métallique comprend 70% en poids de l'alliage à bas point de fusion selon la revendication 11, 20% en poids de l'alliage à point de fusion plus élevé selon la revendication 12 et 10% en poids de nickel.

15. Le procédé selon la revendication 1, dans lequel le mélange métallique comprend 65% en poids de l'alliage à bas point de fusion selon la revendication 10, 25% en poids de l'alliage à point de fusion plus élevé selon la revendication 11 et 10% en poids de nickel.

16. Le procédé selon la revendication 1, dans lequel le mélange métallique comprend 75% en poids de l'alliage à bas point de fusion selon la revendication 10, 20% en poids de l'alliage à point de fusion plus élevé selon la revendication 11 et 5% en poids de nickel.

17. Le procédé selon la revendication 1, dans lequel le mélange métallique comprend 80% en poids de l'alliage à bas point de fusion selon la revendication 10 et 20% en poids de l'alliage à point de fusion plus élevé selon la revendication 11.

18. Le procédé selon la revendication 17, dans lequel le mélange métallique comprend 65% en poids de l'alliage à bas point de fusion selon la revendication 10 et 35% en poids de l'alliage à point de fusion plus élevé selon la revendication 11.

19. Le procédé selon la revendication 1, dans lequel la température du solidus du mélange déposé correspond au moins à 1090°C (2000°F), la température de dépôt correspondant au moins à 1120°C (2050°F).

20. Un procédé pour réparer un dégât dans un composant de superalliage à haute température, sans détériorer les joints de brasage existants et les revêtements correspondants, comprenant:

(a) détermination de la température maximale pouvant être tolérée par le composant, sans risque de détérioration des joints de brasage et des revêtements existants;

(b) sélection d'un alliage sous forme de poudre, à base de nickel, exempt de silicium et à bas point de fusion, ayant une température du liquidus supérieure à 980°C (1800°F) et inférieure à 1090°C (2000°F) et composé d'une poudre (i) comme défini dans la revendication 1;

(c) sélection d'un alliage sous forme de poudre, à base de nickel, exempt de silicium et à point de fusion plus élevé, avec un point de fusion supérieur à 1150°C (2100°F) et composé d'une poudre (ii) comme défini dans la revendication 1;

(d) mélange uniforme des poudres d'alliage (i) et (ii), au choix avec de la poudre de nickel (iii) dans les proportions définies dans la revendication 1;

(e) mélange uniforme du mélange de poudre métallique selon (d) avec un liant organique pour former une composition semi-solide indéformable;

(f) élimination du dégât, si nécessaire, pour former un trou, une fente ou un joint à grand écartement ou une surface réceptrice;

15

(g) remplissage direct ou réfection du dégât à réparer avec le mélange selon (e);

(h) introduction du composant dans un four;

(i) chauffage du composant à une température atteignant environ 1090°C (2000°F) pendant environ 10 minutes et poursuite de l'application de la chaleur jusqu'à l'achèvement de l'homogénéisation chimique.

21. Le procédé selon la revendication 20 dans lequel le dégât réparé résistera à une température d'au moins 1065°C (1950°F) lors de l'usage ultérieur.

22. Le procédé selon la revendication 20, dans lequel le chauffage pendant l'étape (i) se fait à une température d'au moins 1120°C (2050°F), le dégât réparé résistant à une température d'au moins 1090°C (2000°F) lors de l'usage ultérieur.

23. Le procédé selon la revendication 14, dans lequel l'alliage à bas point de fusion comprend huit pour cent de chrome, 2,8 pour cent en poids de bore, et du nickel d'équilibrage.

24. Le procédé selon la revendication 20, dans lequel l'alliage à point de fusion plus élevé de l'étape (c) est celui défini dans la revendication 11.

25. Le procédé selon la revendication 20, dans lequel le four est un four à vide.

26. Le procédé selon la revendication 20, dans lequel le superalliage en cours de réparation est à base de nickel, une fine couche de nickel étant appliquée sur la surface à réparer avant l'étape (f).